# EUROPÄISCHE PATENTSCHRIFT

(11) **EP 1 846 641 B1**
(45) Veröffentlichungstag und Bekanntmachung des Hinweises auf die Patenterteilung: **04.04.2012**
(21) Anmeldenummer: 06707946.7
(22) Anmeldetag: 01.02.2006
(51) Int. Cl.: F01D 19/02, F02C 6/16, F02C 7/268

(54) **VERFAHREN ZUM START EINER DRUCKSPEICHERANLAGE, UND DRUCKSPEICHERANLAGE**
METHOD FOR ACTIVATING A PRESSURE STORAGE SYSTEM, AND A PRESSURE STORAGE SYSTEM
PROCEDE POUR FAIRE DEMARRER UNE INSTALLATION DE RESERVOIR SOUS PRESSION ET INSTALLATION DE RESERVOIR SOUS PRESSION

(30) Priorität: 10.02.2005 CH 214052005
(43) Veröffentlichungstag der Anmeldung: 24.10.2007
(73) Patentinhaber: Alstom Technology Ltd, 5400 Baden (CH)
(72) Erfinder: ALTHAUS, Rolf, CH-8704 Herrliberg (CH); GRÜNENFELDER, Markus, CH-5408 Ennetbaden (CH); HENSSLER, Christian, Warwick, CV35 5LN (GB); MEIER, Patrik Alfons, CH-5400 Baden (CH); PETERS, Hans-Jürgen, 79761 Waldshut (DE); ZINNIKER, Urs, CH-5452 Oberrohrdorf (CH)
(86) Internationale Anmeldenummer: PCT/EP2006/050582
(87) Internationale Veröffentlichungsnummer: WO 2006/084809

(56) Entgegenhaltungen:
- DE-A1- 19 518 093
- DE-A1-102004 034 657
- FR-A- 2 188 056
- US-A1- 2003 131 599

## Beschreibung

### Technisches Gebiet

Die Erfindung bezieht sich auf ein Verfahren zum Start einer Druckspeicheranlage gemäss dem Oberbegriff des Anspruchs 1. Sie bezieht sich weiterhin auf eine Druckspeicheranlage, welche zur Durchführung des erfindungsgemässen Verfahrens geeignet ist. Weiterhin wird eine Steuereinheit angegeben, welche entsprechend geeignet und konfiguriert ist, um eine Druckspeicheranlage zur Durchführung eines erfindungsgemässen Verfahrens zu veranlassen, ein digitaler Code, welcher geeignet ist, die Steuereinheit entsprechend zu konfigurieren, sowie einen Datenträger, auf dem der Code in ausführbarer Form und/oder als Quellcode gespeichert ist.

### Stand der Technik

Aus dem Stand der Technik sind Druckspeicheranlagen bekannt geworden, bei denen ein unter Druck befindliches Speicherfluid, insbesondere Luft, ins einem Speichervolumen gespeichert und bei Bedarf unter Leistungsabgabe in einer Entspannungsmaschine entspannt wird, siehe zum Beispiel das Dokument DE 19 518 093 A1. Eine Luftspeicheranlage ist beispielsweise aus US 2003/0131599 A1 bekanntgeworden. Es ist weiterhin, auch aus diesem Dokument, bekannt geworden, dem Speicherfluid vorgängig der Entspannung in der Entspannungsmaschine Wärme zuzuführen, wodurch bei gleichbleibenden Speicherfluidmassenstrom die Leistungsabgabe der Entspannungsmaschine steigt. Es ist aus dem Stand der Technik bekannt geworden, die Entspannungsmaschine durch Beaufschlagung mit Speicherfluid anzufahren und auf Nenndrehzahl hinaufzuziehen. Die Beschleunigung wird hierbei alleine durch den Arbeitsumsatz bei der Entspannung des Speicherfluids bewerkstelligt. Diese Art des Startens ist beispielsweise aus der Dampfturbinentechnologie bekannt, wo die Dampfturbine zum Anfahren ebenfalls mit einem steigenden Dampfmassenstrom beaufschlagt wird. Startvorrichtungen zum Andrehen der Turbine können dann entfallen. Bei einer Turbine ist jedoch das Schluckvermögen begrenzt, so, dass nur ein begrenzter Massenstrom beziehungsweise Volumenstrom durchgesetzt werden kann, bei den hier diskutierten Bedingungen einer Turbine mit sehr niedrigen Drehzahlen stellt üblicherweise der Eintrittsvolumenstrom den begrenzenden Faktor dar. Das Schluckvermögen ist unter anderem eine Funktion der Drehzahl, und ist je kleiner, je kleiner die Drehzahl ist. Daraus resultiert, dass bei niedrigen Drehzahlen nur ein kleiner Massenstrom durch eine Turbine durchgesetzt werden kann, womit die für die Beschleunigung des Turbinenrotors zur Verfügung stehende Leistung begrenzt ist. Weiterhin ist bei niedrigen Drehzahlen einer Turbine der Enthalpieabbau und damit der Temperaturabfall zwischen dem Eintritt und dem Austritt der Turbine gering. Die hinteren Stufen beispielsweise einer Dampfturbine, welche als Entspannungsmaschine einer Druckspeicheranlage Verwendung findet, sind jedoch auf niedrige Temperaturen ausgelegt. Daraus folgt, dass selbst bei einem Warmstart der Entspannungsmaschine, bei dem die Eintrittstemperatur der Entspannungsmaschine schnell gesteigert werden könnte, bei niedrigen Drehzahlen der Entspannungsmaschine eine Begrenzung aufgrund der zulässigen Temperatur am Austritt der Turbine beachtet werden muss. Daraus resultiert wiederum, dass mehr Speicherfluid bis zum Erreichen der Nenndrehzahl benötigt wird.

Die von der Entspannungsmaschine zum Anfahren selbst durch die Entspannung des Speicherfluids bereitzustellende Beschleunigungsleistung ist also limitiert, woraus ein vergleichsweise langsames Beschleunigen der Entspannungsmaschine bis auf ihre Nenndrehzahl und bis zum Synchronisieren des Generators der Entspannungsmaschine mit dem Netz und damit bis zur ersten Leistungsabgabe verbunden ist. In den heutigen liberalisierten Strommärkten ist aber die Fähigkeit, schnell Strom in ein Elektrizitätsnetz liefern zu können, ein wesentlicher Wettbewerbsvorteil.

### Darstellung der Erfindung

Es wird nunmehr ein Verfahren zum Start einer Druckspeicheranlage der eingangs genannten Art angegeben, welches gemäss einem Aspekt unter vielen der vorliegenden Erfindung die Nachteile des Standes der Technik vermeidet. Spezifischer soll es das Verfahren ermöglichen, die Druckspeicheranlage möglichst schnell und mit einem möglichst grossen Leistungsgradienten in ein Elektrizitätsnetz einzubringen, ohne die Schnellstartfähigkeit der Entspannungsmaschine zu überfordern, was deren Lebensdauer drastisch verkürzen könnte.

Das im Anspruch 1 beschriebene Verfahren und die im unabhängigen Vorrichtunganspruch beanspruchte Druckspeicheranlage werden, neben weiteren Vorteilen, diesen Anforderungen gerecht.

Gemäss dem hier angegebenen Verfahren wird also das Beschleunigen der Entspannungsmaschine beim Start mittels des elektromotorisch betriebenen Generators unterstützt. Im Vergleich zu dem nach dem Stand der Technik üblichen Beschleunigen einer Luftturbine, bei dem diese rein durch das strömende Arbeitsfluid beschleunigt wird, wird damit eine deutlich schnellere Beschleunigung der Entspannungsmaschine und damit eine schnellere Temperatursteigerung des zuströmenden Arbeitsfluides und damit verbunden schliesslich eine frühzeitigere Leistungsabgabe der Entspannungsmsschine ins Elektrizitätsnetz ermöglicht. Also wird die Entspannungsmaschine schneller beschleunigt, und der Generator kann schneller mit dem Netz synchronisiert werden, das heisst, die Druckspeicheranlage ist schneller in der Lage, Leistung ins Netz abzugeben. Um dies zu realisieren, umfasst eine Druckspeicheranlage zur Durchführung des angegebenen Verfahrens eine Startvorrichtung, welche mit dem Generator, welche mit der Entspannungsmaschine auf einem gemeinsamen Wellenstrang angeordnet ist, verbindbar ist, und welche es ermöglicht, den Generator elektromotorisch zu betreiben.Es handelt sich dabei beispielsweise um eine Startvorrichtung, welche einen Betrieb des Generators mit einer Drehzahl ermöglicht, die ein beliebiges Verhältnis zur Frequenz eines Elektrizitätsnetzes aufweist. Es sind hierfür beispielsweise statische Frequenzwandler, sogenannte Static Frequency Converter, SFC, bekannt.

In einer Ausführungsform des Verfahrens wird der Entspannungsmaschine noch im Stillstand oder im Wellendrehen ein minimaler Speicherfluid-Massenstrom zugeführt, und die Entspannungsmaschine wird aus dem Stillstand oder dem Wellendrehen, bevorzugt mit Unterstützung des elektromotorisch betriebenen Generators, beschleunigt. Durch die frühzeitige Beaufschlagung mit Speicherfluid wird ein schädliches Ventilieren einer als Entspannungsmaschine verwendeten Turbine vermieden. Ausserdem wird die Turbine beim Kaltstart schneller aufgewärmt. Beim Wellendrehen oder Wellenschalten wird der Rotor einer Turbine, welche sich nicht im Betrieb befindet, mit geringer Drehzahl von zum Beispiel weniger als 1 Umdrehung pro Minute im Gehäuse gedreht. Auf diese Weise wird eine Verkrümmung des Rotors einer Turbine beim Auskühlen nach dem Abstellen vermieden.

Eine Ausführungsform des Verfahrens sieht vor, die Temperatur des für die Entspannungsmaschine bereitgestellten Speicherfluids so zu steuern, dass die Temperatur und/oder der Temperaturgradient des entspannten Speicherfluides und/oder der Temperaturgradient der Rotortemperatur und/oder der Gehäusetemperatur am Austritt der Entspannungsmaschine unterhalb eines Grenzwertes verbleiben beziehungsweise den Grenzwert nicht überschreiten. Dies kommt bei niedrigen Drehzahlen und bei niedrigen Leistungen der Entspannungsmaschine und insbesondere einer Luftturbine zum Tragen. Bei niedrigen Drehzahlen einer Turbine, das heisst insbesondere während des Anfahrens und Beschleunigens, ist aus Gründen der Stufenkinematik der massenstromspezifische Enthalpieumsatz des Arbeitsfluides gering, weshalb die Temperaturdifferenz zwischen Eintritt und Austritt der Turbine gering ist. Das heisst, die Fluidtemperatur am Austritt liegt vergleichsweise nahe bei der Fluidtemperatur am Eintritt, weshalb ohne geeignete Massnahmen beispielsweise eine thermische Überlastung des für geringe Temperaturen ausgelegten Austrittsbereiches möglich ist. Bei niedriger Leistung einer als Entspannungsmaschine betriebenen Luftturbine stellt sich eine ähnliche Problematik. Aus dem niedrigen Massenstrom resultiert ein geringes Druckverhältnis und damit ein vergleichweise geringer Enthalpie- und Temperaturabbau, weshalb auch bei Nenndrehzahl, aber niedriger Leistung einer Luftturbine die Temperatur am Turbinenaustritt im Vergleich zum Volllastbetrieb nahe an der Eintrittstemperatur liegt. Auch bei Nenndrehzahl und im Leerlaufbetrieb oder niedriger Leistung besteht also die potenzielle Gefahr einer Überhitzung am Turbinenaustritt. Es ist daher von Vorteil, wenn beim Beschleunigen einer Luftturbine auf Nenndrehzahl und beim Belasten bei Leistungen unterhalb der Volllastleistung und insbesondere unterhalb 10% oder 25% bis 50 % der Volllastleistung die Temperatur des der Entspannungsmaschine zuströmenden Speicherfluides derart gesteuert wird, dass bestimmte Temperaturen und/oder Temperaturgradienten am Austritt der Entspannungsmaschine nicht überschritten werden. Dabei kann einerseits die Temperatur am Austritt als Funktion der Temperatur am Eintritt oder die Temperatur am Eintritt als Funktion der Temperatur am Austritt und weiter als Funktion des Druckverhältnisses über die Entspannungsmaschine und/oder der Leistung und/oder der Drehzahl der Entspannungsmaschine bestimmt werden.

In analoger Weise wird in Weiterbildungen des hier beschriebenen Verfahrens die Temperatur des der Entspannungsmaschine zugeführten Spelicherfluidmsssenstroms so gesteuert, dass die Temperatur und/oder der Temperaturgradient des Speicherfluids am Eintritt in die Entspannungsmaschine unterhalb eines Grenzwertes verbleibt. In einer anderen Weiterbildung wird die Temperatur des der Entspannungsmaschine zugeführten Speicherfluidmassenstroms so gesteuert, dass der Temperaturgradient der Rotortemperatur und/oder der Gehäusetemperatur am Eintritt der Entspannungsmaschine unterhalb eines Grenzwertes verbleibt.

Diese Grenzwertregelungen können selbstverständlich auch kaskadierend Verwendung finden, dergestalt, dass jeweils einer der Werte, der am nächsten am Grenzwert ist, die Führung der Regelung übernimmt.

Es ist möglich, und kann sich als vorteilhaft erweisen, wenigstens einen der oben genannten Grenzwerte als Funktion des aktuellen thermischen Zustandes der Entspannungsmaschine während des Betriebs dynamisch und variabel zu definieren.

Weitere Ausführungsformen des hier beschriebenen Verfahrens umfassen, die Temperatur des der Entspannungsmaschine zugeführten Speicherfluidmassenstroms in Abhängigkeit von thermischen Zuständen am Eintritt in die Entspannungsmaschine zu steuern, und mittels der elektromotorisch unterstützten Wellenbeschleunigung die Drehzahl der Entspannungsmaschine so einzustellen, dass die Temperatur und/oder der Temperaturgradient des entspannten Speicherfluids am Austritt aus der Entspannungsmaschine und/oder der Gradient der Gehäusetemperatur und/oder der Rotortemperatur am Austritt der Entspannungsmaschine unterhalb zulässiger Höchstwerte verbleiben.

In noch einer Weiterbildung des Verfahrens, wird eine Solltemperatur des zur Entspannungsmaschine strömenden Speicherfluids abhängig vom thermischen Zustand der Entspannungsmaschine bestimmt.

Weitere Weiterbildungen des Verfahrens und der Druckspeicheranlage ergeben sich aus den Unteransprüchen und den nachfolgend dargestellten Ausführungsbeispielen.

Die Steuerung der Druckspeicheranlage zur Durchführung eines Verfahrens gemäß der Verfahrensansprüche erfolgt beispielsweise mittels einer Steuereinheit, welche über wenigstens einen Signalausgang und bevorzugt eine Mehrzahl von Signalausgängen und Signaleingängen verfügt, wobei wenigstens ein Signalausgang ein Stellsignal an ein Stellorgan der Druckspeicheranlage leitet, wodurch die Druckspeicheranlage zur Durchführung eines oben beschriebenen Verfahrens veranlasst wird. Hierzu generiert die Steuereinheit beispielsweise eine Abfolge von Steuersignalen, oder sie generiert Steuersignale gemäss einem zeitlichen Ablaufplan. Wenn die Steuerung innerhalb eines geschlossenen Regelkreises betrieben wird, so bildet die Steuereinheit die Steuersignale in Abhängigkeit von wenigstens einem Eingangssignal, das an einem Signaleingang anliegt. Um diese Aufgaben zu erfüllen, muss die Steuereinheit entsprechend konfiguriert sein. Die Konfiguration der Steuereinheit, beispielsweise zur Definition eines funktionalen Zusammenhangs zur Bildung von Stellgrössen aus Eingangsgrössen, erfolgt beispielsweise über einen Prozessor, in dem ein digitales Programm geladen wird, welches geeignet ist, die Steuereinheit derart zu konfigurieren, dass sie eine Druckspeicheranlage zur Durchführung eines oben beschriebenen Verfahrens veranlasst.

### Kurze Beschreibung der Zeichnung

Die Erfindung wird nachfolgend anhand von in der Zeichnung illustrierten Ausführungsbeispielen näher erläutert. Im einzelnen zeigen

Figur 1 ein erstes Beispiel einer Druckspeicheranlage und

Figur 2 den schematischen Verlauf einiger Betriebsparameter der Druckspeicheranlage während eines Startvorgangs.

Für das Verständnis der Erfindung nicht wesentliche Details sind weggelassen worden, sind aber für den Fachmann ohne Weiteres implizit mit offenbart. Die Ausführungsbeispiele sind rein instruktiv und sollen nicht zur Einschränkung der in den Ansprüchen gekennzeichneten Erfindung herangezogen werden.

### Wege zur Ausführung der Erfindung

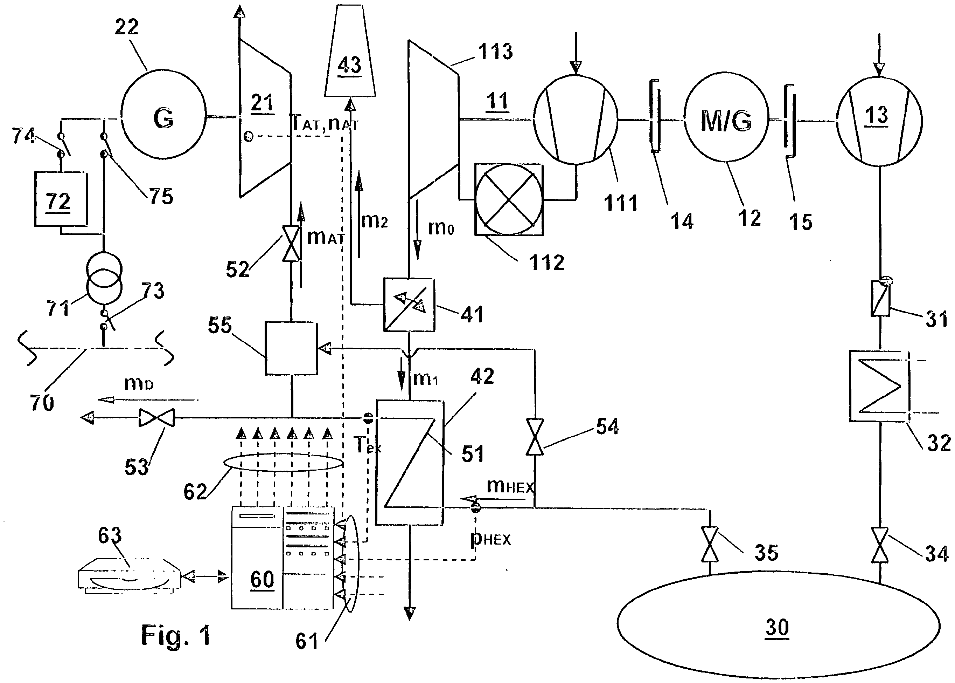

In der Figur 1 ist eine erste zur Durchführung eines oben beschriebenen Verfahrens geeignete Druckspeicheranlage dargestellt. Die Druckspeicheranlage umfasst im Wesentlichen eine Gasturbogruppe 11, welche mit einer Motor-/Generatoreinheit 12 und einem Kompressor 13 auf einem gemeinsamen Wellenstrang angeordnet ist. Die Motor-/Generatoreinheit 12 kann sowohl motorisch als auch generatorisch betrieben werden. Der Kompressor 13 dient zum Aufladen eines Druckspeichervolumens 30. Darin gespeichertes Arbeitsfluid kann in Zeiten hohen elektrischen Leistungsbedarfs arbeitsleistend in der Speicherfluid-Entspannungsmaschine, Luftturbine, 21 entspannt werden, welche den Generator 22 antreibt. Als Luftturbine findet insbesondere eine standardmässig, sozusagen ab Lager, verfügbare Dampfturbine Verwendung, welche nur geringfügig modifiziert werden muss. Dies resultiert in einer besonders ökonomischen Lösung. Die elektrische Maschine 12 kann mittels schaltbarer Kupplungen 14, 15 mit der Gasturbogruppe 11 und/oder dem Kompressor 13 verbunden werden. In Zeiten hohen Strombedarfs und zum Anfahren der Gasturbogruppe ist die Kupplung 14 geschlossen und die Kupplung 15 geöffnet. Zum Anfahren der Gasturbogruppe wird die elektrische Maschine 12 elektromotorisch betrieben, beschleunigt den Kompressor 13 auf eine Drehzahl, bei der eine mindest notwendiger Massenstrom in die Brennkammer gefördert wird, und unterstützt die Beschleunigung der Gasturbogruppe auf Nenndrehzahl. Zur Leistungserzeugung wird die elektrische Maschine 12 generatorisch betrieben und von der Gasturbogruppe 11 angetrieben. In Zeiten hoher Verfügbarkeit elektrischer Energie und mit entsprechend niedrigem Strompreis wird die Kupplung 15 geschlossen und die Kupplung 14 geöffnet. Die Maschine 12 wird elektromotorisch betrieben und treibt den Kompressor 13 an, um mit billig verfügbarem Strom das Speichervolumen 30 mit unter Druck befindlichem Fluid, beispielsweise Luft, aufzuladen, und die so gespeicherte Energie in Zeiten hoher elektrische Leistungsanforderungen und entsprechend hohen Strompreisen in der Entspannungsmaschine 21 wieder zur Stromerzeugung zu nutzen. Die Gasturbogruppe 11 befindet sich währenddessen üblicherweise im Stillstand; es ist aber prinzipiell auch möglich, die Gasturbogruppe 11 im Leerlaufbetrieb bereitzuhalten. Weiterhin ist ein Betriebszustand möglich, bei dem beide Kupplungen 14 und 15 geschlossen sind; dabei treiben, je nach Leistungsauslegung der Komponenten, entweder die Gasturbogruppe 11 und die elektrische Maschine 12 gemeinsam den Kompressor an, oder die Gasturbogruppe 11 wird betrieben, um einerseits die elektrische Maschine 12 zur Stromerzeugung und gleichzeitig den Kompressor 13 anzutreiben. Dabei bestimmt beispielsweise die Erregung der generatorisch betriebenen Maschine 12 die Aufteilung der Leistung der Gasturbogruppe auf den Kompressor 13 und die Maschine 12. Die somit bereitgestellte Möglichkeit, mittels variabler Erregung des Generators und variabler Verdichterleistung die Nutzleistung und die Blindleistung unabhängig voneinander einzustellen, ist in liberalisierten Strommärkten ebenfalls sehr lukrativ. Es ist auch möglich, beide Kupplungen 14 und 15 zu öffnen und die elektrische Maschine 12 im Elektrizitätsnetz ohne Last und ohne Antrieb mitdrehen zu lassen, um die benötigten Blindleistungskomponenten bereitzustellen. Es ist ebenso möglich, auf nicht dargestellte, dem Fachmann aber ohne Weiteres geläufige Weise, auch die Luftturbine oder allgemein eine Entspannungsmaschine auf einem gemeinsamen Wellenstrang mit einem Kompressor und einer sowohl generatorisch als auch elektromotorisch betreibbaren elektrischen Maschine anzuordnen. Auf die analoge Weise wie beim Wellenstrang der Gasturbogruppe sind dann zwischen der Entspannungsmaschine und der elektrischen Maschine sowie zwischen dem Kompressor und der elektrischen Maschine Schaltkupplungen angeordnet. Der Kompressor ist ebenfalls derart geschaltet, dass er Speicherfluid in das Speichervolumen 30 fördert. Dabei kann der Kompressor auf dem Wellenstrang der Entspannungsmaschine mit dem Kompressor auf dem Wellenstrang der Gasturbogruppe sowohl parallel als auch in Reihe geschaltet sein. Eine so zu realisierende Aufteilung der gesamten Kompressorleistung auf zwei Kompressoren ermöglicht hohe Kompressorleistungen, ohne dynamisch nur schwer beherrschbare lange Kompressor-Wellenstränge anordnen zu müssen; obschon eine Anordnung zweier Kompressoren vorderhand aufwändiger erscheint als die Anordnung nur eines Kompressors, ermöglicht die Aufteilung der Kompressorleistung ab einer gewissen Leistungsgrösse die Verwendung standardmässig vorhandener Kompressoren, ohne eine hinsichtlich der Rotordynamik nur schwer beherrschbare Neukonstruktion vornehmen zu müssen. Der Betrieb von Kompressor und Entspannungsmaschine sowie die Schaltzustände der Schaltkupplungen erschliessen sich dem Fachmann anhand der Ausführungen zum Wellenstrang der Gasturbogruppe von selbst. Im Ladebetrieb der Druckspeicherlage ist das Absperrorgan 34 geöffnet, und das Absperr- und/oder Stellorgan 35 ist üblicherweise geschlossen. Vom Kompressor 13 verdichtetes Fluid wird in einem Kühler 32 abgekühlt und strömt durch das geöffnete Absperrorgan 34 in das Speichervolumen 30 ein. Weiterhin ist in diesem Strömungsweg ein Rückschlagorgan 31 angeordnet, welches eine Rückströmung von Fluid in den Verdichter zuverlässig unterbindet. Im Leistungsbetrieb der Druckspeicheranlage erzeugt die Gasturbogruppe 11, welche einen Verdichter 111, eine Brennkammer 112, und eine Turbine 113 umfasst, einen Abgasmassenstrom m₀. Der Abgasmassenstrom m₀ strömt in ein Strömungsverzweigungselement 41, in weichem eine steuerbare Abgasklappe angeordnet ist. Mittels der in dem Verzweiger 41 angeordneten Klappe ist es möglich, den Abgasmassenstrom m₀ in einen ersten Teilstrom m₁ und einen zweiten Teilstrom m₂ aufzuteilen. Der erste Teilstrom strömt in einen Wärmetauscher 42 ein, der im Gegenstrom zu dem Abgas in einem wärmeaufnehmenden Teil mit Speicherfluid aus dem Speichervolumen 30 durchströmbar ist. Auf diese Weise kann das Speicherfluid erwärmt und die Abwärme der Gasturbogruppe in der Luftturbine 21 umgesetzt werden. Der zweite Teilstrom strömt über einen Kamin 43 ab. Im Interesse einer guten Energieausnutzung ist es selbstverständlich erstrebenswert, den zweiten Teilstrom, der ohne Nutzung der Abwärme abströmt, möglichst klein zu halten. Es ist insofern klar, dass einer der Teilströme ohne weiteres zu Null werden kann. Während der erste Teilstrom des Abgases der Gasturbogruppe einen wärmeabgebenden Teil des Wärmetauschers 42 durchströmt, kann ein wärmeaufnehmender Teil 51 des Wärmetauschers über das Stell- und/oder Absperrorgan 35, welches auch als " Wellhead" bezeichnet wird, mit Speicherfluid aus dem Speichervolumen 30 beaufschlagt werden. Der Massenstrom des Speicherfluids, welcher zum wärmeaufnehmenden Teil 51 des Wärmetauschers strömt, ist mit m_{HEX} bezeichnet. Das Speicherfluid wird stromab des Wärmetauschers über ein Stellorgan 52 zur Entspannungsmaschine 21 geleitet. Weiterhin ist im Strömungsweg des Speicherfluides stromab des Wärmetauschers ein Mischer 55 angeordnet. Dem Mischer 55 kann über eine Umgehungsleitung des Wärmetauschers nichterwärmtes Speicherfluid zugeführt werden. Damit kann im Mischer 55 die Temperatur des der Entspannungsmaschine 21 zuströmenden Speicherfluids vermindert werden. Weiterhin ist stromab des wärmeaufnehmenden Teils des Wärmetauschers ein Abblasorgan, Bypassventil, 53 angeordnet, über welches ein Abblasmassenstrom oder Bypassmassenstrom m_{D} des Speicherfluids nach Durchströmen des wärmeaufnehmenden Teils 51 des Wärmetauschers verworfen werden kann, indem es zum Beispiel, im Falle von Luft als Speicherfluid, abgelassen oder rückgekühlt und mittels eines Verdichters in das Speichervolumen 30 zurückgefördert wird. Zur Steuerung und Regelung der Speicheranlage ist eine Steuereinheit 60 angeordnet. Die Steuereinheit umfasst eine Eingangsschnittstelle, welche eine Vielzahl von Eingangssignalen 61 erhält, die den Betriebszustand unterschiedlicher Komponenten der Speicheranlage charakterisieren. Die Steuereinheit 60 ist derart konfiguriert, dass sie aus den Eingangssignalen 61 Steuersignale 62 bildet, welche über eine Ausgabeschnittstelle an Stellglieder der Speicheranlage weitergegeben werden. Hierzu zählen zum Beispiel Stellgrössen zur Ansteuerung der Absperr- und/oder Stellorgane 34, 35, 52, 53 und 54 oder für die Abgasklappe im Strömungsverzweiger 41. Die Konfiguration der Steuereinheit 60 erfolgt beispielsweise über einen nicht dargestellten Prozessor, welcher von einem digitalen Code entsprechend konfiguriert wird. Dieser digitale Code ist auf einem Datenträger 63 abgelegt, und wird beispielsweise beim Start der Steuereinheit in die Steuereinheit geladen. Der Datenträger kann, wie dargestellt, ein externes Speichermedium sein; als Datenträger kann aber auch ein nichtflüchtiger Speicherbaustein oder ein sonstiges geeignetes Speichermedium Verwendung finden. Im Leistungsbetrieb der Speicheranlage wird der Wärmetauscher 42 vom heissen Abgasmassenstrom der Gasturbogruppe durchströmt, dessen Temperatur beispielsweise Werte von 550 bis 580 °C oder 600 °C erreichen kann, wobei ohne weiteres auch Abweichungen von diesen Werten möglich sind. Der Durchflussmassenstrom des wärmeaufnehmenden Teils 51 des Wärmetauschers 42 wird so bemessen, dass die Temperatur Tₑₓ am Austritt aus dem Wärmetauscher einen zulässigen Maximalwert nicht überschreitet. Dies gewährleistet, dass eine Überhitzung des Wärmetauscherapparates vermieden wird. Der steuerbare Verzweiger 41 ermöglicht es dabei, die Gasturbogruppe auch dann zu betreiben, wenn kein Speicherfluid zur Verfügung steht. Der gesamte Abgasmassenstrom wird dann unter Umgehung des Wärmetauschers über den Kamin 43 abgegeben. Mittels des Absperr-und/oder Stellorgans 35, auch als " Wellhead" bezeichnet, wird ein konstanter Druck p_{HEX} von zum Beispiel 60 bar im wärmeaufnehmenden Teil des Wärmetauschers eingestellt; selbstverständlich können auch variable Drücke eingestellt werden, derart, dass eine Gleitdruckfahrweise realisiert wird. Beim Betrieb der Entspannungsmaschine 21 wird der Massenstrom derart eingestellt, dass die Temperatur des Speicherfluids am Austritt aus dem Wärmetauscher einem Sollwert entspricht, und beispielsweise 30 °C oder 50 °C unter der Temperatur des Abgases der Gasturbogruppe liegt. Dies ermöglicht eine bestmögliche Ausnutzung des Speicherfluids, weil ein maximales massenspezifisches Enthalpiegefälle über die Entspannungsmaschine 21 eingestellt wird. Bei einem Kaltstart der Speicheranlage ist es nunmehr möglich, dass die Speicherfluid-Entspannungsmaschine den für den Wärmetauscher erforderlichen Massenstrom mit der vorhandenen Temperatur nicht aufzunehmen vermag. Wenn beispielsweise als Entspannungsmaschine 21 ein Derivat einer Dampfturbine Verwendung findet, welche keine Hitzeschutzschilde, insbesondere am Rotor, und keine Kühlungsmöglichkeit aufweist, so darf diese nur langsam aufgewärmt und/oder auf Nenndrehzahl beschleunigt werden, damit die zulässigen Spannungen im Rotor nicht überschritten werden, was im anderen Falle zu schwerwiegenden mechanischen Beschädigungen führen könnte. Es ist bekannt, beispielsweise Dampfturbinen spannungskontrolliert anzufahren. Dabei werden mechanische Spannungen im Rotor bestimmt, und das Beschleunigen auf Nenndrehzahl erfolgt um so langsamer, je grösser die Spannungen sind. Dies ist als spannungskontrolliertes Anfahren bekannt. Weitere limitierende Faktoren bei der Beaufschlagung der Entspannungsmaschine mit erwärmtem Speicherfluid können beispielsweise Temperaturgradienten am Eintrittsflansch des Gehäuses sein. Eine weitere Begrenzung ergibt sich aus der Temperatur oder einem Temperaturgradienten am Austritt aus der Entspannungsmaschine. Dieser Bereich ist allgemein für niedrige Temperaturen vorgesehen, welche beispielsweise unterhalb von 100°C und geringer liegen. Bei niedrigen Drehzahlen fällt die Temperatur des die Entspannungsmaschine durchströmenden Speicherfluids aber aufgrund der Stufenkinematik nur gering ab, derart, dass auch dann, wenn die Temperatur am Eintritt der Entspannungsmaschine in einem zulässigen Rahmen liegt, eine Überschreitung der zulässigen Temperatur am Austritt der Entspannungsmaschine aufzutreten vermag. Auch bei geringen Leistungen, oder im Leerlaufbetrieb bei Nenndrehzahl, kann dieser Effekt aufgrund des geringen Massenstroms und des damit verbundenen geringen Druckverhältnisses der Entspannungsmaschine auftreten. Es wird daher wenigstens eine Temperatur T_{AT} der Entspannungsmaschine, beispielsweise eine Gehäusetemperatur und/oder eine Fluidtemperatur und/oder eine Rotortemperatur am Eintritt und/oder am Austritt der Entspannungsmaschine und/oder eine andere geeignete Temperatur der Entspannungsmaschine, sowie die Drehzahl n_{AT} des Rotors der Entspannungsmaschine gemessen und in der Steuereinheit 60 ausgewertet. Die Steuereinheit erzeugt eine Stellgrösse für das Stellorgan 52. Das Stellorgan 52 regelt den Massenstrom m_{AT} der Entspannungsmaschine so ein, dass zulässige Temperatur- und/oder Drehzahlgradienten nicht überschritten werden. Das heisst, während des Anfahrvorgangs der Entspannungsmaschine 21 kann nur eine begrenzte Abwärmeleistung der Gasturbogruppe verwertet werden. Generell besteht die Möglichkeit, die Gasturbogruppe nur sehr langsam auf eine hohe Leistungsabgabe zu bringen, und auf diese Weise den Abgasmassenstrom m₀ und die Temperatur des Abgases nur langsam zu erhöhen. Abgesehen von Einschränkungen, welche das Betriebsregime der Gasturbogruppe 11 diesbezüglich mit sich bringen kann, bedeutet dies, dass die Leistungsabgabe der Speicheranlage insgesamt beim Kaltstart nur mit einer grossen Verzögerung ins Netz abgegeben werden kann. Die Fähigkeit, schnell Leistung ins Netz liefern zu können, bietet in den heutigen liberalisierten Strommärkten aber einen wesentlichen Wettbewerbsvorteil. Eine weitere Möglichkeit besteht darin, die Gasturbogruppe mit ihrem maximalen Leistungsgradienten zu belasten, während das Stellorgan 52 der Entspannungsmaschine 21 gemäss den oben angegebenen Kriterien so gesteuert wird, dass die Entspannungsmaschine nicht überlastet wird und mit ihrem normalen, im Kaltstart deutlich geringeren Drehzahl- und Leistungsgradienten angefahren wird. Wenn jedoch der Wärmetauscher 42 aufgrund des schnellen Anfahrens und Belastens der Gasturbogruppe vergleichsweise schnell mit einem hohen Abgasmassenstrom beaufschlagt wird, muss der Speicherfluidmassenstrom ebenfalls sehr schnell gesteigert werden, um eine Überhitzung des Wärmetauscherapparates zu vermeiden. Das heisst, am Austritt aus dem wärmeaufnehmenden Teil 51 des Wärmetauschers werden sowohl der Massenstrom als auch die Temperatur schneller gesteigert, als die Entspannungsmaschine dies zu verarbeiten in der Lage ist. Daher wird während eines derart verlaufenden Anfahrvorgangs, bei dem der Wärmetauscher 42 sehr schnell, beispielsweise innerhalb von 20 oder 30 Minuten nach dem Synchronisieren oder nach dem Zünden der Gasturbogruppe bereits mit einer maximalen thermischen Leistung beaufschlagt wird, einerseits das Stellorgan 54 geöffnet, um nichterwärmtes Speicherfluid zum Mischer 55 zu leiten, und somit die Temperatur des Speicherfluids am Eintritt in die Entspannungsmaschine auf einen Wert unterhalb der Temperatur des Speicherfluids beim Austritt aus dem Wärmetauscher abzusenken und auf einen dem Betriebszustand der Entspannungsmaschine kompatiblen Wert einzuregeln. Ein den von der Entspannungsmaschine unter Einhaltung der zulässigen Drehzahl- und Temperaturgradienten verwertbaren Massenstrom m_{AT} überschreitenden Anteil des Gesamtmassenstroms m_{HEX} wird als Abblasmassenstrom m_{D} über das Stellorgan 53 abgeblasen. Das Stellorgan 53 ermöglicht es, immer, auch bei vollständig geschlossenem Stellorgan 52, einen mindestens erfoderlichen Durchfluss des wärmeaufnehmenden Teils 51 des Wärmetauschers 42 zu gewährleisten. Dieses Verfahren ermöglicht zwar eine schnelle Leistungsproduktion mittels der Gasturbogruppe, ist jedoch wirtschaftlich insofern ungünstig, als über das Abblasorgan 53 insbesondere beim Kaltstart ein erheblicher Massenstrom an zuvor aufwändig verdichtetem Speicherfluid ungenutzt verworfen werden muss. Der Verzweiger 41 ist daher mit einer Klappe zur Strömungsumlenkung versehen, welche eine variable Strömungsaufteilung auf die beiden Abströmöffnungen der Verzweigung ermöglicht, derart, dass variable Anteile des gesamten Abgasmassenstroms m₀ zum Wärmetauscher und zu einem zweiten Zweig der Verzweigung in diesem Falle also zum Kamin, geleitet werden können. Die Klappe des Verzweigers ist daher so ausgeführt, dass sie neben einer ersten stationären Betriebsposition, in welcher der gesamte Abgasmassenstrom in den Wärmetauscher geleitet wird, und einer zweiten stationären Betriebsposition, in welcher der gesamte Abgasmassenstrom in den Kamin geleitet wird, wenigstens eine dritte stationäre Betriebsposition aufweist, in welcher ein erster Teilstrom des Abgases zum Wärmetauscher und ein zweiter Teilstrom in den Kamin geleitet wird. Mit einer derartigen Anordnung ist es möglich, die thermische Leistung, mit welcher der Wärmetauscher beaufschlagt wird, besser an die thermische Leistung anzupassen, welche von der Entspannungsmaschine verwertbar ist. Auf diese Weise kann der unproduktiv verworfene Abblasmassenstrom m_{D} verringert werden. Idealerweise ist die Klappe innerhalb des Verzweigers 41 stufenlos verstellbar; in der Praxis ist dies jedoch vergleichsweise schwierig realisierbar, weshalb auch Verzweiger Anwendung finden, bei denen die Klappe diskrete Zwischenstellungen für den stationären Betrieb aufweist. Auf die oben bereits beschriebene Weise kann, sofern die Massenstrom- und Temperaturlimitierung des Speicherfluids nicht von den Zuständen am Eintritt der Entspannungsmaschine vorgegeben ist, das Anfahren der Entspannungsmaschine beschleunigt werden, indem die Drehzahlerhöhung der Entspannungsmaschine von dem elektromotorisch betriebenen Generator unterstützt wird. Auf diese Weise steigt einerseits der Massenstrom an Speicherfluid, den die Entspannungsmaschine verwerten kann, schneller an. Das heisst, es muss weniger Energie in Form von über das Ablassorgan 53 verworfenem Speicherfluid und in Form von ungenutzt durch den Kamin geleitetem Abgas der Gasturbogruppe verworfen werden. Damit wird der Startvorgang nochmals energieeffizienter. Weiterhin vermag die Entspannungsmaschine 21 schneller Leistung in das Elektrizitätssnetz abzugeben, was ebenfalls einen wirtschaftlichen Vorteil bietet. Der Generator 22 der Entspannungsmaschine 21 ist daher auf seiner elektrischen Seite mit einer Starthilfsvorrichtung versehen. Derartige Anfahrvorrichtungen sind von den Generatoren von Gasturbogruppen und den Antriebsmotoren von Verdichtern an sich bekannt. Auch die elektrische Maschine 12 ist mit einer derartigen Startvorrichtung versehen, welche dem Fachmann in diesem Zusammenhang aber an sich bekannt ist, und welche daher in der Figur nicht explizit dargestellt ist. Während Gasturbogruppen eine derartige Anfahrvorrichtung benötigen, damit deren Verdichter auf eine Drehzahl gebracht wird, welche einen zum Zünden der Brennkammer notwendigen Mindestmassenstrom gewährleistet, werden Dampf- und Luftturbinen üblicherweise angefahren, indem die Maschinen mit Arbeitsfluid beaufschlagt werden; eine externe Anfahrvorrichtung ist an sich nicht notwendig. Der Generator 22 der Entspannungsmaschine 21 ist auf an sich bekannte Weise über einen Transformator 71 und einen Netzschalter 73 mit dem Elektrizitätsnetz verbunden. Aus Gründen der Übersichtlichkeit ist anstatt der üblichen drei Phasen des Drehstromnetzes nur ein schematisierter Verlauf eingezeichnet. Zwischen dem Transformator 71 und den Generator 22 weist die Stromführung zwei Zweige auf, welche über Schalter 74 und 75 selektiert werden können. Im Leistungsbetrieb der Entspannungsmaschine sind die Schalter 73 und 75 geschlossen und der Schalter 74 ist geöffnet, und der Generator 22 speist elektrische Leistung in das Netz 70 ein. Beim Anfahren der Entspannungsmaschine sind die Schalter 73 und 74 geschlossen, und der Schalter 75 ist geöffnet. Der Generator 22 wird dann elektromotorisch und netzasynchron betrieben. Dabei setzt der Frequenzwandler 72, beispielsweise ein so genannter statischer Frequenzumrichter, Static Frequency Converter, SFC, die Wechselstromfrequenz des Netzes auf dem Fachmann an sich geläufige Weise derart um, dass sie von dem nicht synchron elektromotorisch betriebenen Generator verwertbar ist. Auf diese Weise kann die Beschleunigung der Entspannungsmaschine unterstützt werden, wodurch die Problematik eines übermäßigen Anstieg des der Temperatur am Austritt der Entspannungsmaschine bei niedrigen Drehzahlen vermieden und gleichzeitig der Anfahrgradient der Entspannungsmaschine erhöht wird. In der Summe kann die Entspannungsmaschine damit schneller auf Nenndrehzahl beschleunigt und der Generator 22 im Leistungsbetrieb am Netz betrieben werden, als dies möglich wäre, wenn die Entspannungsmaschine nur durch die Leistung des durchströmenden Speicherfluids beschleunigt würde.

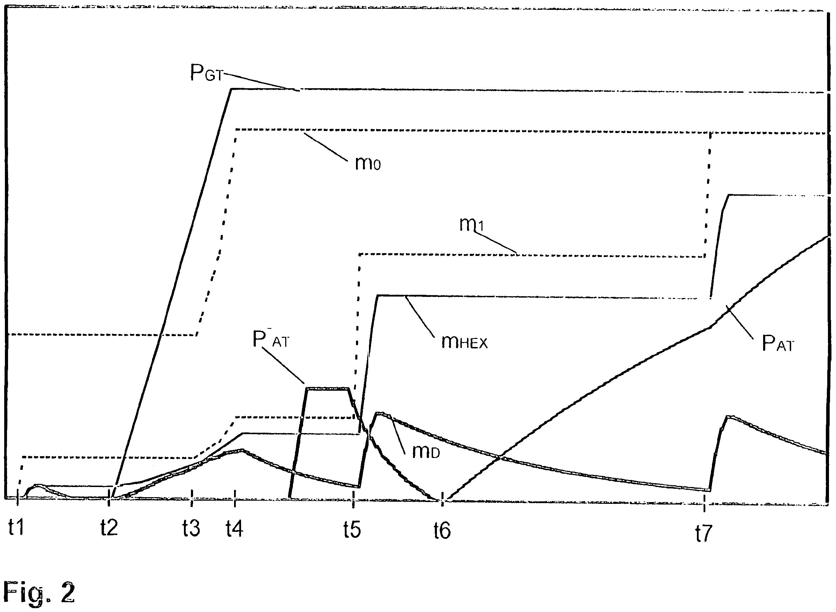

In Verbindung mit der Figur 2 wird nunmehr der Startvorgang der Speicheranlage aus Figur 1 erläutert, bei der die Abgasklappe des Verzweigers 41 neben den Stellungen, in denen der gesamte Massenstrom entweder zum Kamin oder zum Wärmetauscher geführt wird, zwei diskrete stationäre Zwischenstellungen aufweist. In der Figur 2 ist der Verlauf verschiedener Massenströme sowie der Leistung P_{GT} der Gasturbogruppe und P_{AT} der Entspannungsmaschine über der Zeit aufgetragen. Zu beachten ist dabei, dass die Darstellung nicht massstäblich ist, sondern nur unterschiedliche Verläufe qualitativ darstellt, um das Verständnis des Anfahrvorgangs zu erleichtern. Insbesondere dient die Darstellung in der Figur 2 dazu, darzulegen, wie mittels des in den Ansprüchen gekennzeichneten Startverfahrens und der in den Vorrichtungsansprüchen gekennzeichneten Speicheranlage der Abgasmassenstrom m_{D} minimiert und gleichzeitig die Belastungsgeschwindigkeit maximiert wird. In einer ersten Phase des Startvorgangs, welche in dem Diagramm nicht dargestellt ist, und die sich sozusagen links der Darstellung anschliesst, wird die Gasturbogruppe gezündet und auf Nenndrehzahl beschleunigt. Dabei ist die Klappe des Verzweigers 41 so eingestellt, dass der gesamte Abgasmassenstrom m₀ der Gasturbogruppe am Wärmetauscher 42 vorbeigeführt wird. Die Klappe wird zum Zeitpunkt t1 in eine erste Position gebracht, derart, dass ein erster Teilstrom m1 des Abgasmassenstroms m0 in den Wärmetauscher geleitet wird. Die Durchflussregelung des Wärmetauschers reagiert mit einer durch die thermische Trägheit des Wärmetauschers bedingten Verzögerung auf die Beaufschlagung mit heissen Abgasen. Das Stellorgan 53 wird geöffnet, und der Durchfluss durch den wärmeaufnehmenden Teil 51 des Wärmetauschers wird so eingeregelt, dass eine Überhitzung des Wärmetauschers vermieden wird. Dadurch steigt der Massenstrom m_{D} zunächst an. Möglichst frühzeitig wird der nicht dargestellte Massenstrom m_{AT} gesteigert, um mit dem aufheizvorgang der Entspannungsmaschine zu beginnen, und entsprechend wird der Massenstrom m_{D} gesenkt. Zum Zeitpunkt t2 wird die Gasturbogruppe synchronisiert und deren Leistung wird mit einem normalen Leistungsgradienten gesteigert. Eine Gasturbogruppe, welche nicht speziell für Spitzenlast ausgelegt ist, erreicht ihre Maximalleistung typischerweise innerhalb von rund 20 Minuten bis eine halbe Stunde nach dem Synchronisieren, wobei Abweichungen von diesen beispielhaften Zeitangaben ohne weiteres möglich sind. In dem dargestellten Beispiel hat die Gasturbogruppe zum Zeitpunkt t4 ihre Maximalleistung erreicht und verharrt dort; es ist bei der dargestellten Vorrichtung und dem hier erläuterten Verfahren aber ohne weiteres möglich, die Gasturbogruppe unabhängig vom sonstigen Anfahrvorgang beliebig gemäss der Leistungsanforderungen des Netzes zu betreiben. Mit steigender Leistung der Gasturbogruppe steigt auch deren Abgastemperatur und damit die im Wärmetauscher umzusetzende thermische Leistung. Daher steigt nach dem Synchronisieren der Speicherfluidmassenstrom m_{HEX} im Wärmetauscher an. Weil dieser steigende Massenstrom und die steigende Temperatur nicht sofort von der Entspannungsmaschine verarbeitet werden können, steigt auch der Abblasmassenstrom m_{D} an. Im Zeitraum zwischen t3 und t4 wird eine verstellbare Vorleitreihe des Verdichters der Gasturbogruppe geöffnet, weshalb der Abgasmassenstrom m₀ sowie bei gleichbleibender Stellung der Abgasklappe im Verteiler 41 der Massenstrom m₁ im wärmeabgebenden Teil des Wärmetauschers 42 ansteigen. Dies resultiert in einem verstärkten Anstieg des Speicherfluidmassenstroms m_{HEX} durch den Wärmetauscher. Währenddessen wird die Entspannungsmaschine 21 weiter aufgewärmt und ist daher in der Lage, einen grösseren Massenstrom zu verarbeiten. Gleichzeitig kann die Temperatur des der Entspannungsmaschine zuströmenden Speicherfluids abgesenkt werden, indem dem Speicherfluid im Mischer 55 ein nicht erwärmter Speicherfluidmassenstrom zugemischt wird, welcher über das Stellorgan 54 bemessen wird. Daher nimmt der von der Entspannungsmaschine verwertbare Massenstrom zu, und der Abblasmassenstrom m_{D} vollzieht den Anstieg des Speicherfluidmassenstroms m_{HEX} nicht in vollem Umfang nach, weil die Entspannungsmaschine zunehmend grössere Massenströme zu verwerten in der Lage ist. Wie bereits mehrfach dargelegt wurde, kann der Massenstrom der Entspannungsmaschine zusätzlich schneller gesteigert werden, wenn die Entspannungsmaschine mit Unterstützung des elektromotorisch betriebenen Generators angefahren und auf Nenndrehzahl beschleunigt wird. Nach Erreichen der maximalen Leistung der Gasturbogruppe stellt sich ein vorerst konstanter Wert für den gesamten Speicherfluidmassenstrom m_{HE}x ein. Der Abblasmassenstrom nimmt stetig ab. Wenn der Abblasmassenstrom m_{D} einen Grenzwert unterschreitet, wird die Klappe im Verteiler 41 im Zeitpunkt t5 auf eine zweite Zwischenposition eingestellt. Mit diesem Schritt kann prinzipiell auch gewartet werden, bis der Abblasmassenstrom auf Null zurückgegangen ist; im Interesse einer schnellen Leistungsabgabe erfolgt im Ausführungsbeispiel dieser Schritt aber bereits dann, wenn der Ablassmassenstrom einen Grenzwert unterschritten hat. Der Teilstrom m₁ des Abgas-Gesamtmassenstroms, welcher zum Wärmetauscher strömt, nimmt zu. Entsprechend nimmt der Speicherfluidmassenstrom m_{HEX} zu, welche Zunahme durch die thermische Trägheit des Wärmetauschers verzögert wird. Aufgrund der sprunghaften Erhöhung der umzusetzenden thermischen Leistung nimmt auch der Abblasmassenstrom m_{D} zunächst zu, um danach mit fortschreitendem Aufwärmen der Speicherfluid-Entspannungsmaschine wieder abzunehmen. Im Zeitpunkt t7 wird die Abgasklappe im Verzweiger in eine Position gebracht, in der der gesamte Abgasmassenstrom der Gasturbogruppe den Wärmetauscher durchströmt. Dies resultiert in einem nochmaligen Anstieg des Speicherfluidmassenstroms m_{HEX} und des Abblasmassenstroms m_{D}, wobei letzterer mit fortschreitendem Aufwärmen der Speicheranlage auf nicht dargestellte, für den Fachmann aber nachvollziehbare Weise auf Null zurückgeht. Zu einem Zeitpunkt zwischen t4 und t5 wird die Anfahrvorrrichtung der Entspannungsmaschine in Betrieb genommen. Diese nimmt die Leistung P-_{AT} auf. Mit steigender Drehzahl der Entspannungsmaschine kann ein immer grösserer Anteil der Beschleunigungsleistung der Entspannungsmaschine vom durchströmenden Speicherfluid aufgebracht werden, weshalb die Leistungsaufnahme P-_{AT} wieder abfällt; spätestens beim Erreichen der Nenndrehzahl ist diese selbstverständlich bis auf Null zurückgegangen. Zum Zeitpunkt t6 wird die Speicherfluid-Entspannungsmaschine synchronisiert und deren Leistung P_{AT} gesteigert. Die Speicherfluid-Entspannungsmaschine erreicht ungefähr dann im Wesentlichen ihre maximale Leistungsabgabe, wenn der Abblasmassenstrom m_{D} auf Null zurückgegangen ist. Der betriebstechnisch notwendige Verlust an Speicherfluid ergibt sich aus dem Integral unter der Verlaufskurve des Abblasmassenstroms. Dieser wird selbstverständlich um so kleiner, je schneller die Speicherfluid-Entspannungsmaschine in der Lage ist, einen hohen Massenstrom an Speicherfluid mit hoher Temperatur zu verarbeiten. Weiterhin wird dieser Verlust um so kleiner, je mehr stationäre Zwischenstellungen die Abgasklappe im Verteiler 41 aufweist, das heisst, je kleiner die Massenstromsprünge im wärmeabgebenden Teil des Wärmetauschers sind. Im Falle einer stufenlos verstellbaren Abgasklappe können diese Verluste bis auf Null oder wenigstens bis nahe Null reduziert werden. Der Speicherfluidverlust kann, wie oben beschrieben, weiterhin vermindert werden, indem im Mischer 55 die Temperatur des der Speicherfluid-Entspannungsmaschine zuströmenden Speicherfluids vermindert und an eine mit dem Betriebszustand der Speicherfluid-Entspannungsmaschine kompatible Temperatur angepasst wird. Ebenso vermag die Anfahrunterstützung der Entspannungsmaschine durch den elektromotorisch betriebenen Generator diesen Verlust weiter zu verringern.

Im Lichte dieser Ausführungen eröffnen sich dem Fachmann eine Vielzahl weiterer im Umfang der Erfindung mit umfasste Ausführungsformen. Die zur Erläuterung der Erfindung dargestellten Ausführungsbeispiele können dabei selbstverständlich nicht abschliessend sein. Insbesondere kann eine Gasturbogruppe mit sequenzieller Verbrennung, wie sie aus EP 620 362 bekanntgeworden ist, Verwendung finden. Es können zum Beispiel zwei oder mehr Gasturbogruppen auf einen gemeinsamen Wärmetauscher wirken. Weiterhin kann der Ladekompressor 13 auf einem eigenen Wellenstrang mit einer Antriebsmaschine angeordnet sein; weiterhin werden hier im allgemeinen mehrere in Reihe geschaltete Kompressoren verwendet, was aber nicht dargestellt weil nicht erfindungswesentlich ist. Über diese Beispiele hinausgehende Ausführungsformen der Erfindung sind selbstverständlich mit umfasst.

### Bezugszeichenliste

- 11: Gasturbogruppe
- 12: Motor-Generator-Einheit, elektrische Maschine
- 13: Kompressor
- 14: Kupplung
- 15: Kupplung
- 21: Speicherfluid-Entspannungsmaschine; Luftturbine
- 22: Generator
- 30: Speichervolumen
- 31: Rückschlagorgan
- 32: Kühler
- 34: Absperrorgan
- 35: Absperr- und/oder Stellorgan; " Wellhead"
- 41: Strömungsverzweigungselement; Verzweiger, mit Abgasklappe
- 42: Wärmetauscher
- 43: Kamin
- 51: wärmeaufnehmender Teil des Wärmetauschers
- 52: Stellorgan, Regelventil
- 53: Stellorgan, Bypassventil
- 54: Stellorgan, Mischventil
- 55: Mischer
- 60: Steuereinheit
- 61: Eingangssignale der Steuereinheit
- 62: Ausgangssignale der Steuereinheit, Stellgrössen
- 63: Datenträger
- 70: Hochspannungsnetz
- 71: Netztransformator
- 72: Startvorrichtung, Frequenzwandler
- 73: Netzschalter
- 74: Startschalter
- 75: Leistungsschalter
- 111: Verdichter der Gasturbogruppe
- 112: Brennkammer
- 113: Turbine der Gasturbogruppe

- n_{AT}: Drehzahl der Entspannungsmaschine
- m₀: Abgasmassenstrom
- m₁: erster Teilstrom des Abgasmassenstroms
- m₂: zweiter Teilstrom des Abgasmassenstroms
- m_{AT}: Massenstrom der Entspannungsmaschine
- m_{D}: Abblasmassenstrom, Bypassmassenstrom
- m_{HEX}: Speicherfluidmassenstrom durch den Wärmetauscher
- p_{HEX}: Druck des Speicherfluids im Wärmetauscher
- P_{GT}: Leistungsabgabe der Gasturbogruppe
- P_{AT}: Leistungsabgabe der Entspannungsmaschine
- P-_{AT}: Leistungsaufnahme der Starthilfsvorrichtung der Entspannungsmaschine
- T_{AT}: Temperatur der Entspannungsmaschine
- Tex: Temperatur des Speicherfluids nach Wärmetauscher

## Patentansprüche

1. Verfahren zum Start einer Druckspeicheranlage, wobei die Druckspeicheranlage umfasst: ein Speichervolumen (30) für ein unter Druck befindliches Speicherfluid, eine ausschliesslich mit dem unter Druck befindlichen Speicherfluid beaufschlagbare Speicherfluid-Entspannungsmaschine (21), sowie einen Generator (22), der mit der Entspannungsmaschine auf einem gemeinsamen Wellenstrang angeordnet ist, und welches Verfahren umfasst, die Entspannungsmaschine auf eine Betriebsdrehzahl zu bringen, den Generator mit einem Elektrizitätsnetz zu synchronisieren und die Entspannungsmaschine zur Leistungsabgabe in das Elektrizitätsnetz zu betreiben, wobei ein erster Speicherfluidmassenstrom (m_{HEX}) aus dem Speichervolumen (30) entnommen und wenigstens ein Teilmassenstrom des ersten Speicherfluidmassenstromes als zweiter Speicherfluidmassenstrom (m_{AT}) für die Speicherfluid-Entspannungsmaschine bereitgestellt und in der Speicherfluid-Entspannungsmaschine unter Leistungsabgabe entspannt wird, **gekennzeichnet dadurch**, während des Beschleunigens der Speicherfluid-Entspannungsmaschine den Generator wenigstens zeitweise elektromotorisch zu betreiben und somit das Beschleunigen der Speicherfluid-Entspannungsmaschine zu unterstützen.

2. Verfahren gemäss Anspruch 1, **gekennzeichnet dadurch**, der Entspannungsmaschine noch im Stillstand und/oder im Wellendrehen einen minimalen zweiten Speicherfluid-Massenstrom zuzuführen und die Entspannungsmaschine aus dem Stillstand oder aus dem Wellendrehen zu beschleunigen.

3. Verfahren gemäss einem der Ansprüche 1 oder 2, **gekennzeichnet dadurch**, die Temperatur des der Entspannungsmaschine zugeführten zweiten Speicherfluidmassenstroms so zu steuern, dass die Temperatur und/oder der Temperaturgradient des entspannten Speicherfluids am Austritt aus der Entspannungsmaschine unterhalb eines Grenzwertes verbleibt.

4. Verfahren gemäss einem der vorstehenden Ansprüche, **gekennzeichnet dadurch**, die Temperatur des der Entspannungsmaschine zugeführten zweiten Speicherfluidmassenstroms so zu steuern, dass der Temperaturgradient der Rotortemperatur und/oder der Gehäusetemperatur am Austritt der Entspannungsmaschine unterhalb eines Grenzwertes verbleibt.

5. Verfahren gemäss einem der vorstehenden Ansprüche, **gekennzeichnet dadurch**, die Temperatur des der Entspannungsmaschine zugeführten zweiten Speicherfluidmassenstroms so zu steuern, dass die Temperatur und/oder der Temperaturgradient des Speicherfluids am Eintritt in die Entspannungsmaschine unterhalb eines Grenzwertes verbleibt.

6. Verfahren gemäss einem der vorstehenden Ansprüche, **gekennzeichnet dadurch**, die Temperatur des der Entspannungsmaschine zugeführten zweiten Speicherfluidmassenstroms so zu steuern, dass der Temperaturgradient der Rotortemperatur und/oder der Gehäusetemperatur am Eintritt der Entspannungsmaschine unterhalb eines Grenzwertes verbleibt.

7. Verfahren gemäss einem der Ansprüche 3 bis 6, **gekennzeichnet dadurch**, wenigstens einen Grenzwert als Funktion eines aktuellen thermischen Zustandes der Entspannungsmaschine dynamisch zu definieren.

8. Verfahren gemäss einem der vorstehenden Ansprüche, **gekennzeichnet dadurch**, die Temperatur des der Entspannungsmaschine zugeführten zweiten Speicherfluidmassenstroms so zu steuern, dass die Temperatur und/oder der Temperaturgradient des Speicherfluids am Eintritt in die Entspannungsmaschine auf einen Sollwert eingestellt wird, und die Drehzahl der Entspannungsmaschine mittels des elektromotorisch betriebenen Generators so zu erhöhen, dass die Temperatur und/oder der Temperaturgradient des entspannten Speicherfluids am Austritt der Entspannungsmaschine unterhalb eines Grenzwertes verbleibt.

9. Verfahren gemäss einem der vorstehenden Ansprüche, **gekennzeichnet dadurch**, die Temperatur des der Entspannungsmaschine zugeführten zweiten Speicherfluidmassenstroms so zu steuern, dass die Temperatur und/oder der Temperaturgradient des Speicherfluids am Eintritt in die Entspannungsmaschine auf einen Sollwert eingestellt wird, und die Drehzahl der Entspannungsmaschine so einzustellen, dass der Temperaturgradient der Gehäusetemperatur und/oder der Rotortemperatur am Austritt der Entspannungsmaschine unterhalb eines Grenzwertes verbleibt.

10. Verfahren gemäss einem der Ansprüche 8 oder 9, **gekennzeichnet dadurch**, den Sollwert als Funktion eines aktuellen thermischen Zustandes der Entspannungsmaschine dynamisch zu definieren.

11. Verfahren gemäss einem der vorstehenden Ansprüche, **gekennzeichnet dadurch**, dem Speicherfluid vorgängig der Entspannung in der Entspannungsmaschine Wärme zuzuführen.

12. Verfahren gemäss Anspruch 11, **gekennzeichnet dadurch**, die Wärme im Wärmetausch zuzuführen.

13. Verfahren gemäss Anspruch 12, **gekennzeichnet dadurch**, die Wärme im Wärmetausch mit dem Abgas einer Gasturbogruppe (11) zuzuführen.

14. Druckspeicheranlage, umfassend ein Speichervolumen (30) für ein unter Druck befindliches Speicherfluid, eine ausschliesslich mit dem unter Druck befindlichen Speicherfluid beaufschlagbare Speicherfluid-Entspannungsmaschine (21), einen Wärmeübertrager (42), dessen wärmeaufnehmende Seite (51) in einem Strömungsweg von dem Speichervolumen (30) zur Entspannungsmaschine (21) angeordnet ist und dass durch dessen wärmeabgebende Seite im Betriebszustand, Abgase einer Gasturbogruppe (11) strömen, sowie einen Generator (22), der mit der Entspannungsmaschine auf einem gemeinsamen Wellenstrang angeordnet ist, **dadurch gekennzeichnet, dass** eine mit dem Generator (22) verbundene Startvorrichtung (72, 74) vorgesehen ist, welche es ermöglicht, den Generator (22) elektromotorisch zu betreiben und dass die Speicherfluid- Entspannungsmaschine (21) und die Gasturbogruppe (11) auf separaten Wellensträngen angeordnet sind.

15. Druckspeicheranlage gemäss Anspruch 14, **dadurch gekennzeichnet, dass** die Startvorrichtung (72, 74) einen Betrieb des Generators (22) mit einer Drehzahl ermöglicht, welche ein beliebiges Verhältnis zur Frequenz eines Elektrizitätsnetzes aufweist.

16. Druckspeicheranlage gemäss Anspruch 15, **dadurch gekennzeichnet, dass** die Startvorrichtung (72) ein statischer Frequenzwandler ist.

## Claims

1. Method for activating a pressure storage system, the pressure storage system comprising: a storage volume (30) for a pressurized storage fluid, a storage fluid expansion machine (21) capable of being acted upon solely by the pressurized storage fluid, and a generator (22) which is arranged with the expansion machine on a common shafting, and said method comprising bringing the expansion machine to an operating rotational speed, synchronizing the generator with an electricity network and operating the expansion machine for the output of power into the electricity network, a first storage fluid mass flow (m_{HEX}) being extracted from the storage volume (30), and at least one part mass flow of the first storage fluid mass flow being provided as a second storage fluid mass flow (m_{AT}) for the storage fluid expansion machine and being expanded in the storage fluid expansion machine with the output of power, **characterized in that**, during the acceleration of the storage fluid expansion machine, the generator is operated at least temporarily electromotively and supporting the acceleration of the storage fluid expansion machine.

2. Method according to Claim 1, **characterized in that** a minimal second storage fluid mass flow is supplied to the expansion machine when the latter is still at a standstill and/or the shaft is rotating, and the expansion machine is accelerated from standstill or from shaft rotation.

3. Method according to either one of Claims 1 or 2, **characterized in that** the temperature of the second storage fluid mass flow supplied to the expansion machine is controlled such that the temperature and/or the temperature gradient of the expanded storage fluid at the outlet from the expansion machine remain/remains below a limit value.

4. Method according to one of the preceding claims, **characterized in that** the temperature of the second storage fluid mass flow supplied to the expansion machine is controlled such that the temperature gradient of the rotor temperature and/or of the casing temperature at the outlet of the expansion machine remain/remains below a limit value.

5. Method according to one of the preceding claims, **characterized in that** the temperature of the second storage fluid mass flow supplied to the expansion machine is controlled such that the temperature and/or the temperature gradient of the storage fluid at the inlet into the expansion machine remain/remains below a limit value.

6. Method according to one of the preceding claims, **characterized in that** the temperature of the second storage fluid mass flow supplied to the expansion machine is controlled such that the temperature gradient of the rotor temperature and/or of the casing temperature at the inlet of the expansion machine remain/remains below a limit value.

7. Method according to one of Claims 3 to 6, **characterized in that** at least one limit value is defined dynamically as a function of a current thermal state of the expansion machine.

8. Method according to one of the preceding claims, **characterized in that** the temperature of the second storage fluid mass flow supplied to the expansion machine is controlled such that the temperature and/or the temperature gradient of the storage fluid at the inlet into the expansion machine is set at a desired value, and the rotational speed of the expansion machine is increased by means of the electromotively operated generator such that the temperature and/or the temperature gradient of the expanded storage fluid at the outlet of the expansion machine remain/remains below a limit value.

9. Method according to one of the preceding claims, **characterized in that** the temperature of the second storage fluid mass flow supplied to the expansion machine is controlled such that the temperature and/or the temperature gradient of the storage fluid at the inlet into the expansion machine is set at a desired value, and the rotational speed of the expansion machine is set such that the temperature gradient of the casing temperature and/or of the rotor temperature at the outlet of the expansion machine remain/remains below a limit value.

10. Method according to either one of Claims 8 or 9, **characterized in that** the desired value is defined dynamically as a function of a current thermal state of the expansion machine.

11. Method according to one of the preceding claims, **characterized in that** heat is supplied to the storage fluid prior to expansion in the expansion machine.

12. Method according to Claim 11, **characterized in that** the heat is supplied by heat exchange.

13. Method according to Claim 12, **characterized in that** the heat is supplied by heat exchange with the exhaust gas of a gas turbo group (11).

14. Pressure storage system, comprising a storage volume (30) for a pressurized storage fluid, a storage fluid expansion machine (21) capable of being acted upon solely by the pressurized storage fluid, a heat exchanger (42), the heat-absorbing side (51) of which is arranged in a flow path from the storage volume (30) to the expansion machine (21), and through the heat-discharging side of which, in the operating state, exhaust gases from a gas turbo group (11) flow, and a generator (22) which is arranged with the expansion machine on a common shafting, **characterized in that** an activation device (72, 74) connected to the generator (22) is provided, which makes it possible to operate the generator (22) electromotively, and **in that** the storage fluid expansion machine (21) and the gas turbo group (11) are arranged on separate shaftings.

15. Pressure storage system according to Claim 14, **characterized in that** the activation device (72, 74) makes it possible to operate the generator (22) at a rotational speed which has any desired ratio to the frequency of an electricity network.

16. Pressure storage system according to Claim 15, **characterized in that** the activation device (72) is a static frequency converter.

## Revendications

1. Procédé de démarrage d'une installation de réservoir sous pression, l'installation de réservoir sous pression comportant :
un volume de réserve (30) pour le fluide conservé sous pression,
une machine (21) de détente de fluide sous pression alimentée exclusivement par un fluide de réserve placé sous pression ainsi que
un générateur (22) disposé avec la machine de détente sur un train d'arbre commun,
le procédé comportant les étapes qui consistent
à amener la machine de détente à une vitesse de rotation de service,
à synchroniser le générateur sur un réseau d'électricité et
à conduire la machine de détente pour qu'elle délivre de la puissance dans le réseau d'électricité,
un premier débit massique de fluide de réserve (m_{HEX}) étant prélevé dans le volume de réserve (30) et au moins un débit massique partiel prélevé sur le premier débit massique de fluide de réserve étant délivré comme deuxième débit massique de fluide de réserve (m_{AT}) à la machine de détente de fluide de réserve et étant détendu dans la machine de détente de fluide de réserve pour délivrer de la puissance, **caractérisé en ce que**
pendant l'accélération de la machine de détente de fluide de réserve, le générateur est utilisé au moins une partie du temps comme moteur électrique et soutient ainsi l'accélération de la machine de détente de fluide de réserve.

2. Procédé selon la revendication 1, **caractérisé par** l'étape qui consiste à amener un deuxième débit massique minimum de fluide de réserve à la machine de détente encore à l'arrêt et/ou en rotation sur l'arbre et à accélérer la machine de détente depuis l'arrêt ou depuis sa rotation sur l'arbre.

3. Procédé selon l'une des revendications 1 ou 2, **caractérisé par** l'étape qui consiste à commander la température du deuxième débit massique de fluide de réserve apporté à la machine de détente de telle sorte que la température et/ou le gradient de température du fluide de réserve détendu reste en dessous de valeurs limite à la sortie de la machine de détente.

4. Procédé selon l'une des revendications précédentes, **caractérisé par** l'étape qui consiste à commander la température du deuxième débit massique de fluide de réserve apporté à la machine de détente de telle sorte que les gradients de température du rotor et/ou du boîtier à la sortie de la machine de détente restent en dessous de valeurs limites.

5. Procédé selon l'une des revendications précédentes, **caractérisé par** l'étape qui consiste à commander la température du deuxième débit massique de fluide de réserve apporté à la machine de détente de telle sorte que la température et/ou le gradient de température du fluide de réserve à l'entrée de la machine de détente restent en dessous de valeurs limites.

6. Procédé selon l'une des revendications précédentes, **caractérisé par** l'étape qui consiste à commander la température du deuxième débit massique de fluide de réserve apporté à la machine de détente de telle sorte que le gradient de température du rotor et/ou du boîtier à l'entrée de la machine de détente reste en dessous d'une valeur limite.

7. Procédé selon l'une des revendications 3 à 6, **caractérisé par** l'étape qui consiste à définir de manière dynamique au moins une valeur limite en fonction de l'état thermique instantané de la machine de détente.

8. Procédé selon l'une des revendications précédentes, **caractérisé par** l'étape qui consiste à commander la température du deuxième débit massique de fluide de réserve apporté à la machine de détente de telle sorte que la température et/ou le gradient de température du fluide de réserve à l'entrée de la machine de détente soient réglés à des valeurs de consigne et par l'étape qui consiste à augmenter la vitesse de rotation de la machine de détente au moyen du générateur fonctionnant comme moteur électrique de telle sorte que la température et/ou le gradient de température du fluide de réserve détendu à la sortie de la machine de détente restent en dessous de valeurs limite.

9. Procédé selon l'une des revendications précédentes, **caractérisé par** l'étape qui consiste à commander la température du deuxième débit massique de fluide de réserve apporté à la machine de détente de telle sorte que la température et/ou le gradient de température du fluide de réserve à l'entrée de la machine de détente soient réglés à une valeur de consigne et par l'étape qui consiste à régler la vitesse de rotation de la machine de détente de telle sorte que le gradient de température du boîtier et/ou du rotor à la sortie de la machine de détente reste en dessous d'une valeur limite.

10. Procédé selon l'une des revendications 8 ou 9, **caractérisé par** l'étape qui consiste à définir dynamiquement la valeur de consigne en fonction de l'état thermique instantané de la machine de détente.

11. Procédé selon l'une des revendications précédentes, **caractérisé par** l'étape qui consiste à apporter de la chaleur au fluide de réserve avant sa détente dans la machine de détente.

12. Procédé selon la revendication 11, **caractérisé par** l'étape qui consiste à apporter la chaleur par un échange thermique.

13. Procédé selon la revendication 12, **caractérisé par** l'étape qui consiste à apporter la chaleur par un échange de chaleur avec les gaz d'échappement d'un groupe de turbine à gaz (11).

14. Installation de réservoir sous pression comprenant
un volume de réserve (30) pour un fluide de réserve placé sous pression,
une machine (21) de détente de fluide sous pression qui ne peut être alimentée qu'avec un fluide de réserve placé sous pression,
un dispositif (42) de transfert de chaleur dont le côté (51) récepteur de chaleur est disposé dans un parcours d'écoulement qui relie le volume de réserve (30) et la machine de détente (21), les gaz d'échappement d'un groupe de turbine à gaz (11) traversant en fonctionnement son côté fournisseur de chaleur, et
un générateur (22) disposé sur un train d'arbre commun avec la machine de détente,
**caractérisée en ce que**
un dispositif de démarrage (72, 74) relié au générateur (22) est prévu et permet de faire fonctionner le générateur (22) en moteur électrique et
**en ce que** la machine (21) de détente de fluide de réserve et le groupe de turbine à gaz (11) sont disposés sur des trains d'arbres distincts.

15. Installation de réservoir sous pression selon la revendication 14, **caractérisée en ce que** le dispositif de démarrage (72, 74) permet de faire fonctionner le générateur (22) à une vitesse de rotation qui présente un rapport quelconque par rapport à la fréquence d'un réseau d'électricité.

16. Installation de réservoir sous pression selon la revendication 15, **caractérisée en ce que** le dispositif de démarrage (72) est un convertisseur statique de fréquence.
